(19) Europäisches Patentamt
European Patent Office
Office européen des brevets

(11) Veröffentlichungsnummer: **0 280 651**
**A1**

## (12) EUROPÄISCHE PATENTANMELDUNG

(21) Anmeldenummer: 88810100.3

(22) Anmeldetag: 20.02.88

(51) Int. Cl.⁴: **A 47 G 25/08**
A 01 K 97/10, D 06 F 57/12

(30) Priorität: 20.02.87 CH 646/87

(43) Veröffentlichungstag der Anmeldung:
31.08.88 Patentblatt 88/35

(84) Benannte Vertragsstaaten:
AT BE CH DE FR GB IT LI NL SE

(71) Anmelder: Honecker, Theo
Seestrasse 31
D-7129 Brackenheim/Stockheim (DE)

(72) Erfinder: Steiner, Paul
Buchbergstrasse
CH-9422 Staad (CH)

(74) Vertreter: Gachnang, Hans Rudolf
Algisserstrasse 33
CH-8500 Frauenfeld (CH)

(54) **Universell verwendbarer Materialträger.**

(57) Der Träger (1) besteht im wesentlichen aus einem am Lastarm (3) schwenkbar angebrachten Bügel (5), welcher Bügel (5) einen Gegenstand, z.B. eine Stange (37) oder eine Türkante (39), umfasst und mittels der Kraft der Feder (9) und dem Gewicht des Lastarmes (3) am Gegenstand gehalten wird. Sobald am Lastarm (3) eine Last angehängt wird, drückt der Lastarm (3) mit der Auflagefläche (27) stärker gegen den Gegenstand und klemmt den Träger (1) in Abhängigkeit der durch die Last ausgeübten Kraft F fest.

FIG. 2

EP 0 280 651 A1

**Beschreibung**

## Universell verwendbarer Materialträger

Gegenstand der vorliegenden Erfindung ist ein universell verwendbarer Materialträger gemäss Oberbegriff des Patentanspruches 1.

Es sind bereits Vorrichtungen zum Aufhängen mehrerer Kleidungsstücke an im Mauerwerk oder irgendeiner Wand mittels Schrauben befestigten hochschwenkbaren Trägern bekannt. Diese können, einmal festgeschraubt, nur an ein und demselben Ort verwendet werden.

Aus der FR-PS-1.079.077 ist eine Konsolenträgerstange mit darauf verschiebbar angeordneten Konsolen bekannt. Die Konsole besteht aus einer kragenförmigen, das vertikal verlaufende Tragrohr eng umschliessende Rohrschelle, deren Durchmesser geringfügig grösser ist als der Durchmesser der Stange. An der Rohrschelle ist schwenkbar ein Lastträger angelenkt, an dessen Rücken eine Feder befestigt ist, die die Rohrschelle daran hindert, durch ihr Eigengewicht nach unten zu gleiten. Bei Belastung des Lastarmes gelangt dessen Rücken in Anlage mit der Stange und klemmt die Konsole fest. Diese bekannte Konsole hat den Nachteil, dass sie nur gerade an der dafür vorgesehenen Stange verschiebbar angeordnet werden kann; eine universelle Verwendung an beliebiger Stelle und an dünnen, dicken, runden oder anders geformten Teilen wie Turen, Fensterrahmen, Türdrückern etc. ist nicht möglich.

Hier will die Erfindung Abhilfe schaffen.

Die Erfindung, wie sie in den Ansprüchen gekennzeichnet ist, löst die Aufgabe, einen universellen Materialträger zu schaffen, der sowohl an vertikalen als auch horizontalen Rohren, Stangen und auch an Türen, Türdrückern, Fensterverschlüssen, etc., festgeklemmt werden kann.

Die durch die Erfindung erreichten Vorteile sind im wesentlichen darin zu sehen, dass der Träger an beliebiger Stelle angebracht und allenfalls die daran aufgehängten Objekte zusammen mit dem Träger von einem zum andern Ort gebracht und sicher aufgehängt werden können.

Es ist auch möglich, den Träger als Halter für eine Fischerrute zu verwenden, wenn dessen Lastarm in das Erdreich eingesteckt und die Rute in den Haltebügel eingelegt wird.

Im folgenden wird die Erfindung anhand von lediglich zwei Ausführungswege darstellenden Zeichnungen näher erläutert. Es zeigt:

Fig. 1 eine Seitenansicht eines Trägers in annähernd geschlossenem Zustand,

Fig. 2 eine Seitenansicht des Trägers befestigt an einer Stange,

Fig. 3 den Kopf des Trägers und

Fig. 4 einen Grundriss eines Trägers.

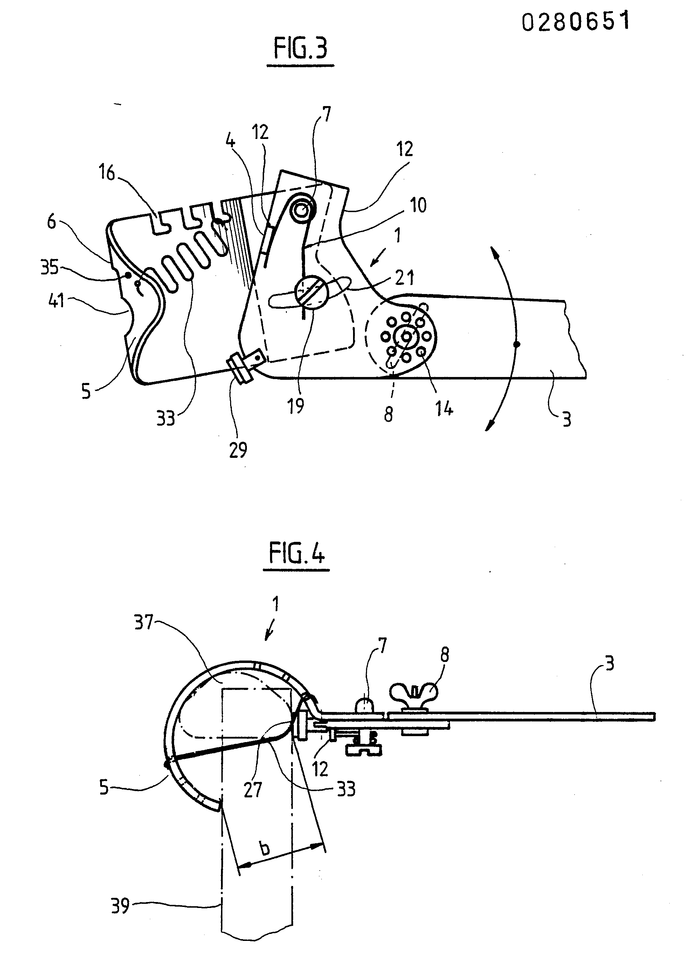

Der Träger 1 besteht aus dem Lastarm 3 und dem Haltebügel 5, welche durch eine Niete 7 oder ein ähnliches Verbindungsmittel schwenkbar miteinander verbunden sind. Der Bügel 5 umschliesst vorzugsweise einen Bogen, der kleiner ist als 200° bis 250°, damit eine möglichst grosse Oeffnung zum Einführen des Bügels 5 an der Befestigungsstelle vorhanden ist. Eine Feder 9 verbindet den Bügel 5 mit dem Lastarm 3 und ist in Bohrungen 11 und 13 in diesen eingehängt. Anstelle der Feder 9 kann auch eine Feder 10 treten, die das Verbindungsmittel 7 umschlingt und deren Enden in Anschlag mit einem Nocken 12 und einer Schraube oder einem Nocken 19 steht (Fig. 3). Am Lastarm 3 ist eine Mehrzahl von Löchern 15 und/oder Kerben 17 zum Einhängen von Lasten, z.B. Kleiderbügeln, Einhängehaken, Werkstücken zum Lackieren oder Trocknen, etc., angebracht.

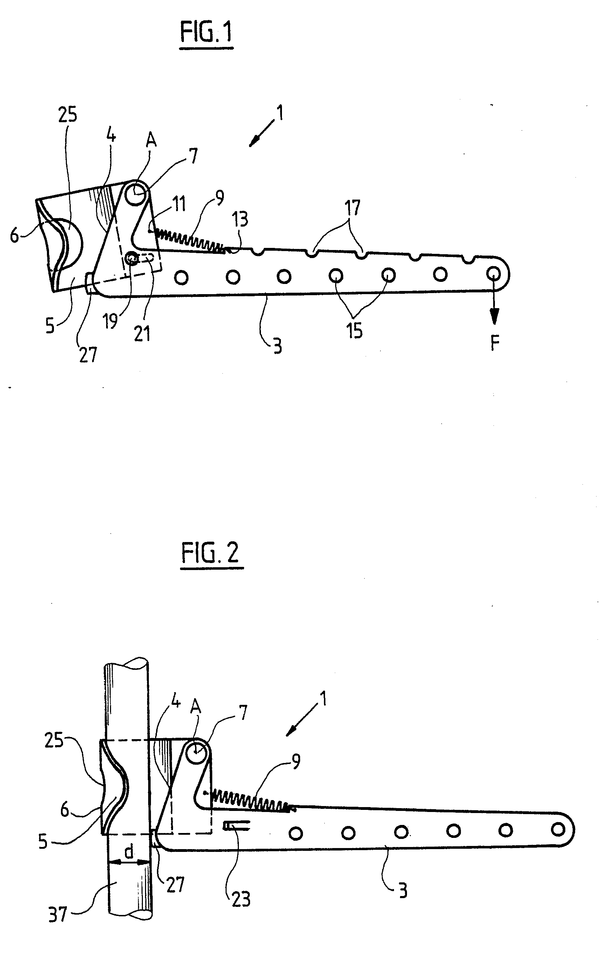

Der Nocken oder Bolzen 19, der in eine bogenförmig verlaufende Ausnehmung 21 eingreift, begrenzt den Schwenkbereich des Lastarms 3 zum Bügel 5 (Fig. 1).

Anstelle eines Bolzens 19 und der Ausnehmung 21 tritt in Fig. 2 ein aus dem Lastarm 3 ausgestanzter und aus der Fläche im Lastarm 3 schanzenartig herausgebogener Lappen 23. Bei Nichtgebrauch des Trägers liegt der Bügel 5 am Ende des ausgebogenen Lappens 23 an (Fig. 2).

Im Bügel 5 kann eine einen Grossteil des Rückens 6 des Bügels 5 überspannende Ausnehmung 25 angebracht sein. Es kann auch nur eine kleine schlüssellochförmige Ausnehmung 41 zum Einhängen des Trägers 1 an einem Schraubenkopf vorgesehen sein.

Im Scheitel des abgekröpften Lastarmes 3 ist in einem Abstand von der Schwenkachse A eine festangeordnete oder schwenkbare Auflagefläche 27 aus Gummi oder Kunststoff befestigt (Fig. 1/2).

In Fig. 3 ist in einer weiteren Ausführungsform der Erfindung die Auflagefläche als Puffer 29 ausgebildet, der am Rücken 4 des Lastarmes 3 schwenkbar angelenkt ist. Die Auflagefläche des Puffers 29 kann eben, geriffelt oder mit einer Spitze versehen sein; sie kann aber auch ein Profil aufweisen, das der Oberfläche der Befestigungsstelle angepasst ist. Es ist möglich, die unterschiedlichen Auflageflächen als Aufsteckaufsatz auf den Puffer 29 auszubilden.

Der Lastarm 3 ist in dieser Ausgestaltung der Erfindung gelenkig mit dem die Ausnehmung 21 aufnehmenden Teil des Trägers 1 verbunden. Mittels einer Flügelschraube 8 und entsprechend vorgesehenen Rastmitteln 14, z.B. Lochungen und Nocken oder ineinandergreifende Zähne (keine Abbildung), kann der Lastarm 3 in einem Schwenkbereich von ca. 270 Grad verstellt werden.

Eine Feder 33, ein Federband oder ein Gummizug ist an einer Bohrung 35 und einer Ausnehmung 16 im Bügel 5 eingehakt und überspannt die offene Seite des Bügels 5. Durch Anordnung mehrerer mehrerer nebeneinander liegender Bohrungen 35 und Ausnehmungen 16 kann der von der Feder 33 abgetrennte Bereich im Bügel 5 der Dicke des Befestigungsteiles angepasst werden, um ein unbeabsichtigtes Aushängen oder Kippen des Bügels 5 zu verhindern. Anstelle eines flachen, aus Metall oder Holz bestehenden Lastar mes 3 kann selbstverständlich auch ein Lastarm treten, der Rippen zur Erhöhung der Formstabilität aufweist, oder es kann ein rohrförmiger Körper verwendet werden, an dem entsprechend auf die aufzuhängenden Lasten zugeschnittene Einsätze befestigt, bzw. eingesteckt werden können. Wird der Materialträger 1 zum Halten einer Fischerrute verwendet, indem der Lastarm 3 in das Erdreich eingesteckt und die Rute in den Bügel 5 eingelegt wird, so kann der Lastarm 3 mit einer trittförmigen Einsteckhilfe versehen sein. Auch der Bügel 5 kann einen anderen als runden Querschnitt aufweisen, z.B. als Mehreck ausgebildet sein.

Im folgenden wird die Funktionsweise des Lastenträgers 1 kurz erläutert:

Zum Anbringen des Lastenträgers 1 an einer runden oder eckigen Stange 37, deren Durchmesser d kleiner ist als die lichte Weite b des Bügels 5, wird der Bügel 5 von Hand im Uhrzeigersinn gedreht, bis dieser über die Stange 37 geschoben werden kann. Die Feder 9, bzw. die Feder 10 zieht nun den Bügel 5 im Gegenuhrzeigersinn zurück und klemmt den Lastenträger 3 an der Stange 37 fest. Die Auflagefläche 27, bzw. der Puffer 29, verhindert das nach unten Gleiten des Trägers 1. Wird am Träger 1 eine Last F angehängt, so bewirkt dies, dass der Lastarm 3 die Auflagefläche 27 bzw. den Puffer 29 stärker an die Stange 37 anpresst und damit den Bügel 5 stärker festklemmt.

Wird der Träger 1 an einer Stange 37 befestigt, deren Durchmesser bedeutend kleiner ist als die lichte Weite b des Bügels 5, so wird vorzugsweise eine Einlage in die Ausnehmung 25, 41 eingeschoben, um eine genügende Klemmung zu bekommen. Die Einlage kann jede gewünschte Profilierung aufweisen, die eine Verschiebung des Bügels 5 gegenüber der Befestigungsstelle, z.B. der Stange 37, gewährleistet. Es ist beispielsweise möglich, eine in der Ausnehmung 25, 41 festklemmbare schienenförmige Einlage derart auszubilden, dass diese unten über den Bügel 5 hinausragt und eine zusätzliche Abstützung bildet. Analog zur Feder 33 am Bügel 5 kann auch an der Einlage eine entsprechende, z.B. eine Stange 37 teilweise anliegend umschlingende Feder angebracht werden. In Fig. 4 ist die Stange 37 nicht rund; sie kann dennoch als Halteelement für den Träger 1 dienen, da sie durch die Einlage (nicht dargestellt) und die Feder 33 im Bügel 5 positioniert wird. Weiter ist in Fig. 4 in strichpunktierten Linien eine in den Bügel 5 hineinragende Türkante 39 dargestellt. Aus der Figur ist damit ersichtlich, dass der Träger 1 ohne weiteres auch an Tür- oder Fensterflügeln befestigt werden kann.

Nicht gezeigt ist die Möglichkeit, den Bügel 5 an einem Türdrücker oder an einem Fensterverschluss zu befestigen. Dazu wird der Türdrücker durch die Ausnehmung 25 hindurchgeführt und damit der Träger 1 auf diese Weise festgehalten.

Selbstverständlich kann der Träger 1 nicht nur an vertikal verlaufenden Stangen oder Kanten angebracht werden, sondern in gleicher Weise auch an schräg oder horizontal liegenden.

**Patentansprüche**

1. Universell verwendbarer Materialträger mit einer Befestigungsvorrichtung und einem schwenkbar daran befestigten Lastarm, dadurch gekennzeichnet, dass die Befestigungsvorrichtung aus einem hakenförmigen Bügel (5) besteht, der mit dem Lastarm (3) gelenkig verbunden und durch eine Feder (9,10) zusammenklappbar ist derart, dass der Bügel (5) mit dem dem Bügel (5) zugekehrten Ende des Lastarmes (3) als Klemmelement dient, dessen lichte Weite (b) veränderbar ist.

2. Materialträger nach Anspruch 1, dadurch gekennzeichnet, dass die gelenkige Verbindung durch das Verbindungsmittel (7) des Lastarmes (3) mit dem Haltebügel (5) nahe der Oberkante des Haltebügels (5) angeordnet ist und dass zwischen dem Haltebügel (5) und dem Lastarm (3) eine die beiden Elemente (3,5) gegeneinander verschwenkende Feder (9,10) eingesetzt ist.

3. Materialträger nach Anspruch 1 oder 2, dadurch gekennzeichnet, dass die Feder (10) das den Lastarm (3) und den Haltebügel (5) zusammenhaltende Verbindungsmittel (7) umschlingt und an einem Anschlag oder Nocken (12) am Lastarm (3) und an einem Bolzen (19) am Haltebügel (5) angreifend angeordnet ist.

4. Materialträger nach einem der Ansprüche 1 bis 3, dadurch gekennzeichnet, dass am Bügel (5) oder am Lastarm (3) ein Mittel (21, 23) zum Blockieren oder zur Begrenzung der von der Feder (9) hervorgerufenen Schwenkbewegung vorgesehen ist, oder dass der Bügel (5) oder der Lastarm (3) derart zueinander angeordnet sind, dass der Schwenkbereich des Bügels (5) zum Lastarm (3) in Abhängigkeit der Lage des Lastarmes (3) eingeschränkt ist.

5. Materialträger nach Anspruch 4, dadurch gekennzeichnet, dass das Mittel aus einem im Bügel (5) oder am Lastarm (3) angebrachten, mit dem im Bügel (5) befestigten Bolzen (19) und/oder aus einer Ausnehmung (21), in die der Bolzen (19) eingreift, besteht.

6. Materialträger nach einem der Ansprüche 1 bis 5, dadurch gekennzeichnet, dass der Bügel (5) aus einem bogen- oder mehreckförmig gebogenen Blech besteht, das einen maximal einen Bogen von 200° bis 250° umschliesst, besteht.

7. Materialträger nach einem der Ansprüche 1 bis 6, dadurch gekennzeichnet, dass am unteren Ende des Rückens (4) des Lastarmes (3) im wesentlichen im grösstmöglichen Abstand vom Drehpunkt in der Achse A eine elastische Auflagefläche (27) oder ein schwenkbarer Puffer (29) mit als Spitze ausgebildeter oder profilierter oder gerillter Kontaktstelle angebracht ist und/oder dass die Kontaktstelle als auswechselbarer Aufsatz ausgebildet ist.

8. Materialträger nach einem der Ansprüche 1 bis 7, dadurch gekennzeichnet, dass im Scheitel des Bügels (5) eine Ausnehmung (25, 41) angeordnet ist, in die ein Türdrücker oder ein Schraubenkopf einführbar ist oder eine Einlage einsteckbar ist, deren Oberfläche der Kontur und deren Längenausdehnung der Befestigungsstelle angepasst ist.

9. Materialträger nach einem der Ansprüche 1 bis 8, dadurch gekennzeichnet, dass im Bügel (5) Mittel (16 und 35) zum verstellbaren Einhängen einer Feder (33) angebracht sind.

10. Materialträger nach einem der Ansprüche 1 bis 9, dadurch gekennzeichnet, dass die Lage des Lastarmes 3 mittels einer Flügelschraube 8 zu Bügel (5) ein- und verstellbar ist und dass zum Einrasten in der jeweiligen Verstellposition Rastmittel (14) in Gestalt von Lochungen und darin eingreifende Nocken oder ineinandergreifende Zähne vorgesehen sind.

0280651

## FIG.1

## FIG.2

1/2

FIG.3

0280651

FIG.4

2/2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | FR-A-1 079 077 (HARLEY)<br>* Anspruch 3; Abbildung 1 *<br>--- | 1,6 | A 47 G 25/08<br>A 01 K 97/10<br>D 06 F 57/12 |
| A | FR-A-1 400 561 (HOUY)<br>* Insgesamt *<br>--- | 1,6 | |
| A | US-A-2 941 671 (LEWIS et al.)<br>* Abbildungen 1-4 *<br>--- | 1,4,5 | |
| A | FR-A-2 371 142 (MERTEN)<br>* Abbildung 1 *<br>----- | 10 | |

| RECHERCHIERTE SACHGEBIETE (Int. Cl.4) |
|---|
| A 47 G<br>A 47 J<br>A 47 F<br>A 01 K<br>D 06 F |

Der vorliegende Recherchenbericht wurde für alle Patentansprüche erstellt

| Recherchenort | Abschlußdatum der Recherche | Prüfer |
|---|---|---|
| DEN HAAG | 11-05-1988 | BEUGELING G.L.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes Dokument

EPO FORM 1503 03.82 (P0403)